Europäisches Patentamt

European Patent Office

Office européen des brevets

(11) Publication number: **0 010 352**
A1

# EUROPEAN PATENT APPLICATION

(21) Application number: **79301869.8**

(22) Date of filing: **12.09.79**

(51) Int. Cl.³: **G 02 B 7/26**
**H 01 L 33/00**

(30) Priority: **16.10.78 US 952189**

(43) Date of publication of application:
**30.04.80 Bulletin 80/9**

(84) Designated Contracting States:
**DE FR GB NL**

(71) Applicant: **MOTOROLA, INC.**
**4350 East Camelback Road Suite 200F**
**Phoenix, Arizona 85018(US)**

(72) Inventor: **Cutler III, Albert B.**
**431 E. Ellis Drive**
**Tempe Arizona 85282(US)**

(74) Representative: **Newens, Leonard Eric et al.**
**F.J. CLEVELAND CO. 40/43 Chancery Lane**
**London WC2A 1JQ(GB)**

(54) Fibre optics active element interface connector and method for making same.

(57) A package for semiconductor devices (8) includes a segment (38) of optical fiber within a ferrule (30) for direct attachment of the package to a fiber optic connector.

./...

18   22

10

26

20   24

8

14

12

16

*F̲I̲S̲* 1

42

38

30

40   44

46

34

32

36

*F̲I̲S̲* 2

The invention relates to fiber optic transducers and, in particular, to packaging systems for active semiconductor elements such as Light Emitting Diodes and Light Sensitive Diodes. The packages are optically and mechanically compatible with prior art fiber optic connector systems.

## Background of the Invention

U.S. Patent No. 3,999,837 for a "Light Transmitting Fiber Bundle Connector" describes a system for connecting and disconnecting fiber optic conductor pairs with an acceptable loss level at such an interconnection. The particular configuration described is directed at obtaining good concentricity of and contact between the mated fibers. Prior art means for interfacing the fibers to active elements such as a light source or sensor are believed to be limited to relatively expensive packages which are labor intensive and are subject to breakage or other damage both during the initial assembly process and in use. The inexpensive systems which are available are relatively inefficient in terms of optical coupling between the active element and fiber optic transmission line. Contemporary package designs typically utilize a pigtail optical fiber attached at one end to an optical sink or source. The other end of the pigtail may be fitted with a male connector assembly as shown in U.S. Patent No. 3,999,837, supra, or with some other suitable interface system for mating the optical fiber to the remainder of a system. U.S. Patent No. 4,108,534 by Noane et al and 4,114,979 by Heldt are also representative of such connecting systems.

## Brief Disclosure of Invention

Shortcomings of the prior art devices are overcome by the instant invention by mounting the active semiconductor sink or source together with a short length or segment of optical fiber in an integral package which is compatible with one of the existing fiber optic connector systems such as those of Patent Nos. 3,999,837, 4,108,534 or 4,114,979, supra. The integral package and short fiber provides a degree of protection to the fiber active element interconnection that is not attained in prior art assemblies. The invention provides an integral package which allows easy and low cost placement and replacement of active opto-electrical elements in a fiber optics system. The interface between active element and optical fiber is enhanced by means of use of a transparent plastic bonding agent. Small diameter fibers may be accommodated since the integral package provides the necessary protection such fibers demand.

Therefore, it is an object of the invention to provide a package for enhanced protection of a semiconductor/fiber optic interface.

It is another object of the invention to reduce the assembly complexity, thus reducing the cost of an active element/fiber optic combination.

It is still another object of the invention to provide a rugged opto-electric package which is easily placeable or replaceable in opto-electrical circuits.

These and other objects of the invention will be more readily understood upon reading the Detailed Description of the Invention considered together with the drawings in which:

FIGURE 1 represents in cross-section a first embodiment of the invention,

FIGURE 2 shows in cross-section a second embodiment of the invention, and

- 4 -

FIGURE 3 illustrates in cross-section a third embodiment of the invention which is especially advantageous for low cost, mass production of the invention.

Detailed Description of the Invention

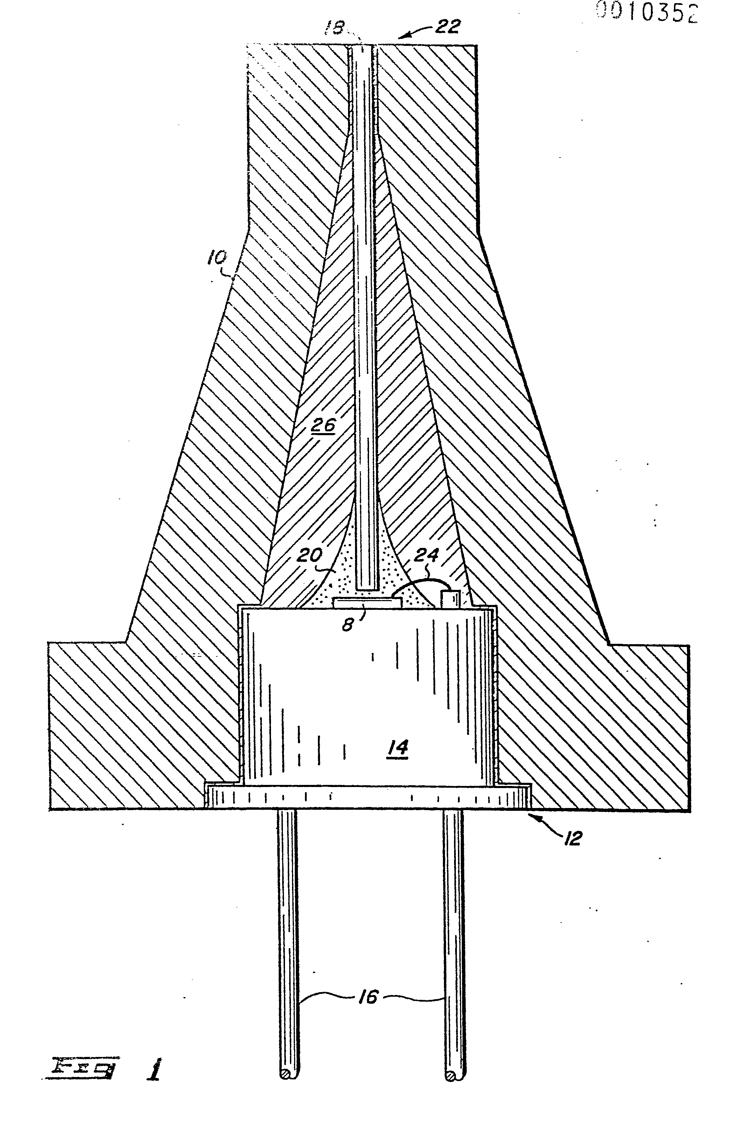

Referring first to FIGURE 1, a cross-section of one embodiment of the invention may be seen. Enclosure or ferrule member 10 provides an integral mount for header 14 and optical fiber 18. Header 14 carries die 8 which may be either a light emitting or a light sensitive semiconductor device, such as a diode. Bonding wire 24 provides a connection from lead 16 to die 8. Transparent bonding material 20, which may comprise silicone rubber material, is used to provide adherence between optical fiber 18 and the active area of die 8. The silicone rubber material may be General Electric Part No. 261, Silicone Die Coat, for example. Optical fiber element 18 is preferably adhered to die 8 after header assembly 14 is completed. The assembly comprising header 14 and all of its elements together with adhered optical fiber 18 is then inserted into ferrule 10, as shown. A thermal setting plastic material, epoxy for example, is used to fill void 26 to provide good adherence between the elements of the assembly thereby maintaining the elements in fixed spatial relationship, and also to provide the necessary protection for fiber 18. It should be noted that the epoxy in void 26 is applied in such a way as to fill the void between header 14 and ferrule 10 as also indicated at point 12. The epoxy material may be Hysol Co. Part No. 0S1600 Epoxy, for example. Optical fiber 18 preferably extends beyond surface 22 at the time of assembly. Fiber 18 is then cut and polished flush with surface 22 after assembly.

While the embodiment of the invention as shown in FIGURE 1 is intended to be compatible with the connector described in U.S. Patent No. 3,999,837, it is apparent that

other configurations of ferrule 10 can be used which will allow compatibility with other connector configurations.

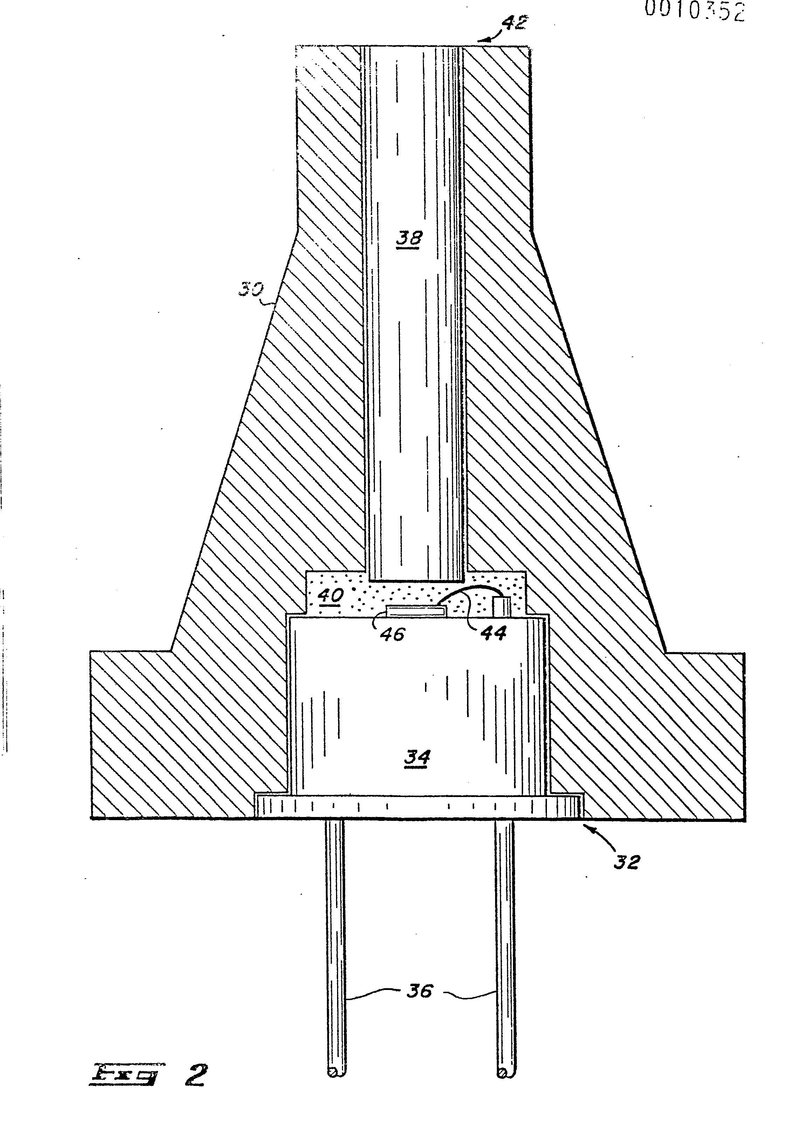

Optical fiber 18 of FIGURE 1 is typically 8 mils (0.2 mm.) in diameter but can be as small as 3 mils (0.08 mm.) or less. Other, larger fiber diameters can be utilized. For example, FIGURE 2 illustrates another embodiment of the invention wherein a larger diameter optical fiber is used. In FIGURE 2 ferrule 30 has a larger inside diameter for accommodating optical fiber 38, which may have a diameter on the order of 40 mils (1.02 mm.). It will be understood, by one having skill in the fiber optics art, that the fiber diameters of FIGURE 1 and FIGURE 2 may or may not include a glass cladding which is utilized to enhance optical transmission characteristics. Generally, core size is dictated by the active area of the semiconductor element. Thick cladding is employed to enable the use of larger internal diameters in, for example, the ferrule of FIGURE 2. This, in turn, provides more accurate concentricity between the hole containing fiber 38 and the mounting hole for header 34, thereby enhancing alignment of fiber 38 and active element 46.

The assembly process in this case may correspond to that of the invention of FIGURE 1. Alternatively fiber 38 is installed in ferrule 30 with a small amount of epoxy bonding material (not shown). Fiber 38 and ferrule 30 are cut and polished to provide smooth surface 42. A clear plastic such as a transparent epoxy is then disposed in volume 40 and the header assembly 34 comprising die 46, wire bonds 44 and leads 36 inserted as shown. The epoxy material then fills the void between header 34 and ferrule 30 as shown at 32.

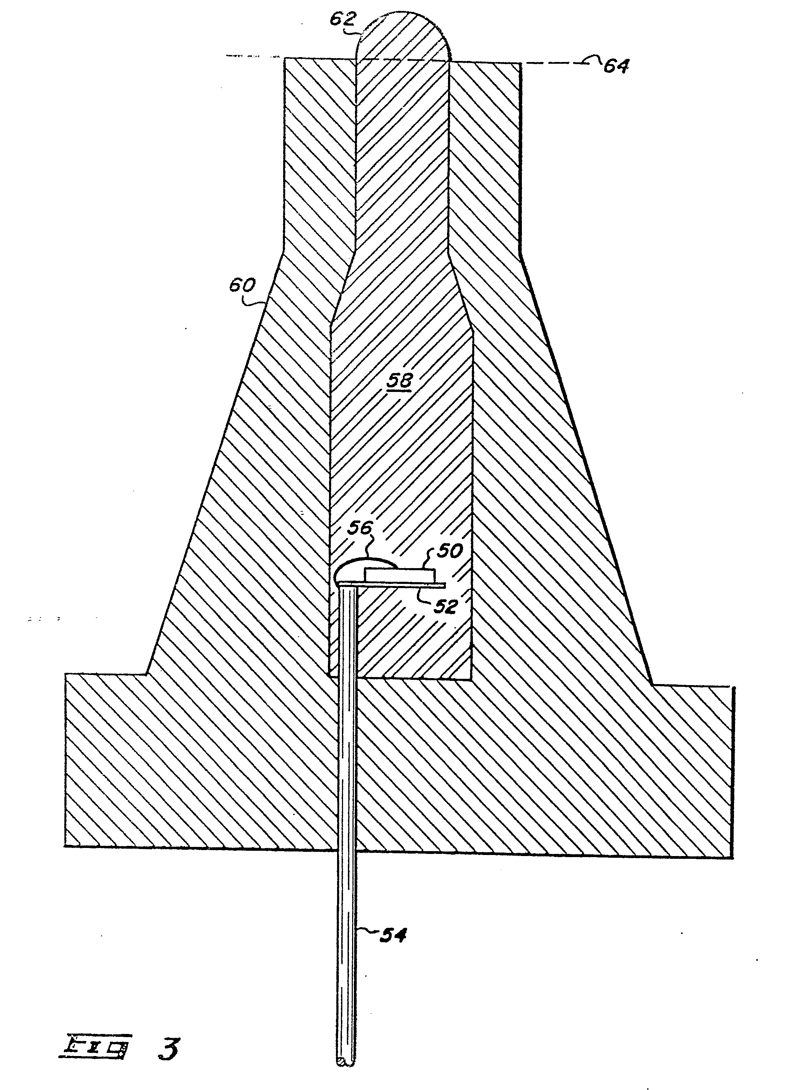

FIGURE 3 illustrates an embodiment of the invention which is especially adaptable for high volume production since it lends itself to automated procedures and processes. Die 50 is mounted on die bonding surface 52 which is part of a lead frame comprising leads 54. Leads

0010352

56 provide electrical connections from die 50 to leads 54. The assembly comprising 50, 52, 54 and 56 is encapsulated in a transparent plastic material 58 by means of injection or transfer molding processes which are well known per se to those skilled in the art. Material 58 is thus in intimate contact with the active surface of die 50 and serves as the optical coupling element. Enclosure or ferrule member 60 is then molded around material 58 as shown in FIGURE 3. Ferrule 60 is preferably an opaque plastic. Portion 62 of material 58 which extends beyond dashed line 64 is cut off and the combination of transparent material 58 and ferrule 60 is polished flush as shown at dashed line 64. This provides a single package enclosing semiconductor active element 50, material 58, and the interface therebetween. All of the individual operations involved in manufacture of such a package may be accomplished utilizing assembly techniques well known in the semiconductor art.

Each of the embodiments of the invention as shown in FIGURES 1, 2 and 3 provide good optical interface between the active die element and the fiber optic material. The embodiments of FIGURES 1 and 2 provide this interface by means of silicone rubber material 20 and 40, respectively. The interface in the embodiment of FIGURE 3 is inherent in the configuration. The close contact provided by these interfaces is much desired since interface integrity is important to a low loss system. Each of the embodiments of the invention as shown in FIGURES 1, 2 and 3 may be inserted into the bushing portion of the connector system described in U.S. Patent No. 3,999,837. Of course, the configuration of ferrule 10 of FIGURE 1, ferrule 30 of FIGURE 2, or ferrule 60 of FIGURE 3 may be configured to accommodate other connector designs. In any case the integral package of the instant invention provides a high quality, relatively low cost active semiconductor element which may either sense light or emit light in an electro-optical system. The invention provides a low cost, high quality, easily replaceable element for these applications.

While the invention has been particularly shown and described with reference to preferred embodiments thereof, it will be understood by those skilled in the art that various modifications and changes may be made to the present invention from the principles of the invention described above without departing from the spirit and scope thereof as encompassed in the accompanying claims. Therefore it is intended in the appended claims to cover all such equivalent variations as come within the scope of the invention as described.

## Claims

1.    In a packaging system for providing a compatible interface between an active semiconductor optical element and a connector for an optical fiber transmission line, the improvement comprising:

a segment of optical fiber having two ends;

transparent plastic bonding material disposed around said optical fiber segment and on the active semiconductor element; and

package means enclosing said optical fiber segment and said active semiconductor element for maintaining one of said ends of said optical fiber segment in close proximity to said active element.

2.    A packaging system for an active semiconductor optical element and an optical fiber segment wherein an active surface of the semiconductor is positioned perpendicular to an axis of the packaging system and electrical connections for the semiconductor protrude from the system in a first direction parallel to the axis; the system further comprising:

a ferrule member; and

a fiber optical segment having first and second ends, said first end being adhered to said active semiconductor element with a transparent bonding agent for providing a low loss light transfer between the active semiconductor element and said optical fiber segment, said ferrule member surrounding and supporting said optical fiber segment and the active semiconductor element in a predetermined spatial relationship.

3.    A packaging system for an active semiconductor optical element having an optical interface and an electrical interface, said packaging system comprising:

at least one enclosure;

an active semiconductor element;

an optical fiber segment having two ends, one of said ends of said optical fiber being in close proximity to said active semiconductor element, the second of said ends being flush with a face of said at least one enclosure for interfacing with a optical fiber transmission line; and connection means for providing an electrical interface to the active semiconductor element, said connection means protruding from said enclosure.

4. The packaging system according to claim 3 further comprising transparent bonding means for adhering said one end of the optical fiber segment to said active semiconductor element.

5. The packaging system according to claim 3 wherein said enclosure is symmetrical about an axis thereof and said segment is approximately parallel to said axis.

6. The packaging system according to claim 5 further comprising transparent bonding means for adhering said optical fiber to said active semiconductor element.

7. The system according to claim 3 wherein said enclosure is a molded plastic having a relatively small diameter at said flush end and having a relatively large diameter at said close proximity end, said larger diameter end being molded to contact and adhere to said active semiconductor element, said at least one enclosure being of molded material and enclosing said fiber segment.

8. The packaging system according to claim 7 wherein said enclosure is opaque.

A method for making an optical-electrical element comprising the steps of:

molding a transparent plastic element having a larger end and a smaller end, said larger end being in intimate contact with an active semiconductor element having electrical connections thereto, said smaller end being of predetermined dimension, said transparent plastic element being adaptable to a fiber optic transmission line;

molding a plastic enclosure about said transparent plastic element for protecting said transparent plastic element and said electrical connections, said electrical connections protruding from said larger end; and

polishing said smaller end of said transparent plastic element and said plastic enclosure to form a flush composite surface for mating another transparent element thereto.

10. The method according to claim 9 wherein said plastic enclosure is opaque.

FIG 1

Fig 2

FIG 3

| | DOCUMENTS CONSIDERED TO·BE RELEVANT | | CLASSIFICATION OF THE APPLICATION (Int. Cl.) |
|---|---|---|---|
| Category | Citation of document with indication, where appropriate, of relevant passages | Relevant to claim | |
| | US - A - 3 932 761 (H. J. RAMSEY et al.) <br> * column 3, line 49 to column 4, line 7 * <br> -- | 1-6 | G 02 B   7/26 <br> H 01 L   33/00 |
| | US - A- 4 118 100 (J.E. GOELL et al.) <br> * fig. 3a, 4, 5 * <br> -- | 1-6 | |
| | DE - A1 - 2 613 069 (THOMSON-CSF) <br> * page 7, line 20 to page 8, line 17 * <br> -- | 1-6 | TECHNICAL FIELDS SEARCHED (Int.Cl.) |
| | DE - A1 - 2 755 372 (INTERNATIONAL STANDARD ELECTRIC CORP.) <br> * claim 1 * <br> -- | 1-6 | G 02 B   7/26 <br> H 01 L   33/00 |
| D,A | US - A - 3 999 837 (T.P. BOWEN et al.) <br> * complete document * <br> -- | 7,8 | |
| A | US - A - 4 045 120 (G. DE CORLIEU et al.) <br> * fig. 6 * <br> -- | | |
| A | US - A - 4 065 203 (J.E. GOELL et al.) <br> * fig. 3c * <br> -- | | CATEGORY OF CITED DOCUMENTS |
| A | US - A - 3 948 582 (D.J. MARTIN) <br> *fig. 1 and 2 * <br> ---- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |

| | | | |
|---|---|---|---|
| X | The present search report has been drawn up for all claims | | &: member of the same patent family, corresponding document |
| Place of search <br> Berlin | Date of completion of the search <br> 03-12-1979 | Examiner <br> FUCHS | |

EPO Form 1503.1   06.78